# EUROPEAN PATENT SPECIFICATION

(11) **EP 2 810 919 B1**
(45) Date of publication and mention of the grant of the patent: **24.06.2020**
(21) Application number: 13742858.7
(22) Date of filing: 29.01.2013
(51) Int. Cl.: C01B 33/035, C01B 33/02

(54) **POLYCRYSTALLINE SILICON ROD CARRYING TOOL, AND POLYCRYSTALLINE SILICON ROD RETRIEVAL METHOD**
TRAGEWERKZEUG FÜR POLYKRISTALLINEN SILICIUMSTAB UND ERFASSUNGSVERFAHREN FÜR POLYKRISTALLINEN SILICIUMSTAB
OUTIL DE SUPPORT DE BARREAU DE SILICIUM POLYCRISTALLIN ET PROCÉDÉ DE RÉCUPÉRATION DE BARREAU DE SILICIUM POLYCRISTALLIN

(30) Priority: 02.02.2012 JP 2012021015
(43) Date of publication of application: 10.12.2014
(73) Proprietor: Shin-Etsu Chemical Co., Ltd., Tokyo 100-0004 (JP)
(72) Inventor: KUROSAWA, Yasushi, Joetsu-shi Niigata 942-8601 (JP); NETSU, Shigeyoshi, Joetsu-shi Niigata 942-8601 (JP)
(74) Representative: Forrest, Stuart
(86) International application number: PCT/JP2013/000457
(87) International publication number: WO 2013/114858

(56) References cited:
- DE-A1- 2 600 290
- DE-A1-102005 038 965
- DE-B3-102009 027 830
- JP-A- H03 218 933
- JP-A- 2002 210 355
- JP-A- 2010 254 539
- JP-A- 2011 068 553
- JP-A- 2011 195 441

## Description

### Technical Field

The present invention relates to a tool for carrying out a polycrystalline silicon rod produced by the Siemens method from a reactor, and a method for retrieving a polycrystalline silicon rod using the same.

### Background Art

Polycrystalline silicon is a raw material for single crystal silicon substrates for manufacturing semiconductor devices and for silicon substrates for manufacturing solar cells. Generally, polycrystalline silicon is manufactured by the Siemens method whereby a source gas containing chlorosilane is brought into contact with a heated silicon core wire so that polycrystalline silicon is precipitated on the surface of the silicon core wire through a Chemical Vapor Deposition (CVD) method.

When the Siemens method is used to grow polycrystalline silicon, two silicon core wires in vertical orientation and one silicon core wire in horizontal orientation are assembled into a U-shape in a reactor. Each end of the U-shaped silicon core wire is accommodated into a core wire holder, and these core wire holders are fixed to a pair of metal electrodes installed on a base plate. The passage of electric current through the U-shaped silicon core wire via the metal electrodes heats the silicon core wires and exposure of a source gas to the silicon core wires causes polycrystalline silicon to precipitate, providing a polycrystalline silicon rod. In a general reactor, several sets of U-shaped silicon core wires are arranged on a base plate.

The internal space of a dome type reaction vessel (bell jar) provided in a reactor is sealed with a base plate, and the sealed space becomes a reaction space for growth from the vapor phase of polycrystalline silicon. Metal electrodes for energizing a U-shaped silicon core wire penetrate the base plate with an insulator sandwiched between the electrodes, and are connected either to a power source provided below the bell jar or to another metal electrode, placed in the bell jar, for energizing the U-shaped silicon core wire. Such a configuration is disclosed, for example, in Japanese Patent Laid-Open No. 2011-68553 (Patent Literature 1).

Commercial reactors have several tens of U-shaped silicon core wires arranged in a multi-ringed style inside. In recent years, with increasing demand for polycrystalline silicon, reactors have gotten larger to boost production, and the adoption of a method to precipitate a large amount of polycrystalline silicon in each batch has been getting widespread. With this trend, the number of silicon core wires installed in a reactor is increasing and the length of each silicon core wire is getting longer.

The diameter is also getting larger, and a polycrystalline silicon rod with more than 100 mm in diameter is starting to be produced. Japanese Patent Laid-Open No. 2011-195441 (Patent Literature 2) discloses a method of making a polycrystalline silicon rod with 200 mm in diameter and 3000 mm in length. A polycrystalline silicon rod of such size exceeds 400 kg in weight in the U-shape state, and moreover, a crack often appears in the polycrystalline silicon rod after the completion of reaction, posing a danger of collapse and the like. This makes the operation of carrying it out of the reactor after the completion of reaction (retrieving operation) difficult and dangerous.

In view of the problems above, Japanese Patent Laid-Open No. 2002-210355 (Patent Literature 3) discloses the invention of an apparatus (rod dismounting apparatus) for remotely retrieving a polycrystalline silicon rod to ensure safety for operators.

DE 10 2009 027830 B3 (Patent Literature 4) discloses removing polycrystalline silicon rods from a reactor by driving a rigid and automatic guidance with a computer-assisted detection method based on calibration points above the opened reactor, gripping rod pairs by a mechanical or pneumatic clamping device, and subsequently storing it in a transport device.

DE 26 00 290 A1 (Patent Literature 5) discloses a method for gripping an object, comprising a clamp for gripping or holding an article comprising contracting the bore of a hose or tubular form section by introducing air under pressure from the outside into the hollow walls.

DE 10 2005 038965 A1 (Patent Literature 6) discloses load-carrying equipment comprising a carrying body whose inner surface faces an object and has a chamber filled with gas.

### Citation List

### Patent Literature

Patent Literature 1: Japanese Patent Laid-Open No. 2011-68553
Patent Literature 2: Japanese Patent Laid-Open No. 2011-195441
Patent Literature 3: Japanese Patent Laid-Open No. 2002-210355
Patent Literature 4: DE 10 2009 027830 B3
Patent Literature 5: DE 26 00 290 A1
Patent Literature 6: DE 10 2005 038965 A1

### Summary of Invention

### Technical Problem

Unfortunately, since the apparatus described above, as disclosed in Japanese Patent Laid-Open No. 2002-210355, holds a polycrystalline silicon rod with a jig that provides fixing at several points, danger such as a collapse of the polycrystalline silicon rod due to a crack still remains.

In view of the problems described above, an object of the present invention is to provide a tool for carrying a polycrystalline silicon rod in large diameter and large weight, which is produced by precipitation of polycrystalline silicon on a silicon core wire, out of a reactor in a simple and safe manner, and a method of retrieving a polycrystalline silicon rod using the same.

### Solution to Problem

To solve the problems described above, the present invention provides a polycrystalline silicon rod carrying tool according to present claim 1. Preferred embodiments are presented in the dependent claims. The tool is used for taking a silicon rod out of a reactor, wherein the silicon rod is polycrystalline silicon grown on a U-shaped silicon core wire. The polycrystalline silicon rod carrying tool includes a tubular member for accommodating the polycrystalline silicon rod inside and an air bag provided in the tubular member. The air bag inflated by gas injection to the interior presses a side of the polycrystalline silicon rod from a direction perpendicular to a plane including both pillars of the U-shaped silicon core wire so as to hold in place the polycrystalline silicon rod inside the tubular member.

The inner circumference surface of the tubular member has at least one pair of two planes facing each other and the air bag is provided at one of the two planes.

The other of the two planes includes an elastic member that comes in contact with one side of the polycrystalline silicon rod held in place in the tubular member.

A polycrystalline silicon rod carrying tool according to a mode of the present invention may include a suspension jig for lifting and moving the tubular member holding the polycrystalline silicon rod inside.

In another mode of the present invention, a detachable bottom board may be provided at the lower part of the' tubular member.

Preferably, the outer circumference face of at least one of two inner circumferential planes facing each other in the tubular member should be a smooth surface.

In this case, a mode in which the outer circumference face is detachable from the main body of theltubular member is possible.

According to an aspect of the present invention, a method of retrieving a polycrystalline silicon rod by means of the polycrystalline silicon rod carrying tool described above includes accommodating a polycrystalline silicon rod in the tubular member, holding in place the polycrystalline silicon rod with the air bag inflated by gas injection in the tubular member, and taking the tubular member out of the reactor.

### Advantageous Effect of Invention

The present invention allows the carrying out of a polycrystalline silicon rod in large diameter and large weight, which is produced by precipitation of polycrystalline silicon on a silicon core wire, from a reactor in a simple and safe manner.

### Brief Description of Drawings

[Figure 1] Figure 1 is a schematic cross-sectional diagram illustrating a configuration example of a reactor used in producing a polycrystalline silicon rod according to an embodiment of the present invention.
[Figure 2] Figure 2 is a diagram for illustrating the appearance of cracks found in a polycrystalline silicon rod after the completion of precipitation reaction.
[Figure 3] Figure 3 is a schematic diagram illustrating the manner of taking out a polycrystalline silicon rod from a reactor using a tool for carrying out a polycrystalline silicon rod according to an embodiment of the present invention.
[Figure 4A] Figure 4A exemplifies the cross-sectional shape of a tubular member when the tubular member contains a pair of polycrystalline silicon rods inside, sectioned in a direction perpendicular to the longitudinal direction thereof.
[Figure 4B] Figure 4B exemplifies the cross-sectional shape of a tubular member when the tubular member contains a pair of polycrystalline silicon rods inside, sectioned in a direction perpendicular to the longitudinal direction thereof.
[Figure 4C] Figure 4C exemplifies the cross-sectional shape of a tubular member when the tubular member contains a pair of polycrystalline silicon rods inside, sectioned in a direction perpendicular to the longitudinal direction thereof.
[Figure 5] Figure 5 exemplifies the longitudinal-section shape of a comparative tubular member when the tubular member contains a pair of polycrystalline silicon rods inside.
[Figure 6] Figure 6 exemplifies the longitudinal-section shape of a tubular member when the tubular member contains a pair of polycrystalline silicon rods inside.
[Figure 7] Figure 7 exemplifies the longitudinal-section shape of a tubular member when the tubular member contains a pair of polycrystalline silicon rods inside.
[Figure 8] Figure 8 is a diagram for illustrating the manner of taking out only a polycrystalline silicon rod accommodated in a tubular member laid on its side on a cart with rollers so as to move the polycrystalline silicon rod onto a separately prepared cart.
[Figure 9] Figure 9 is a diagram for illustrating a configuration of the tubular member exemplified in Figure 8.
[Figure 10] Figure 10 illustrates another configuration example of a tubular member having an outer circumference face detachable from the body of the tubular member.

### Description of Embodiment

An embodiment of the present invention will now be described with reference to the drawings.

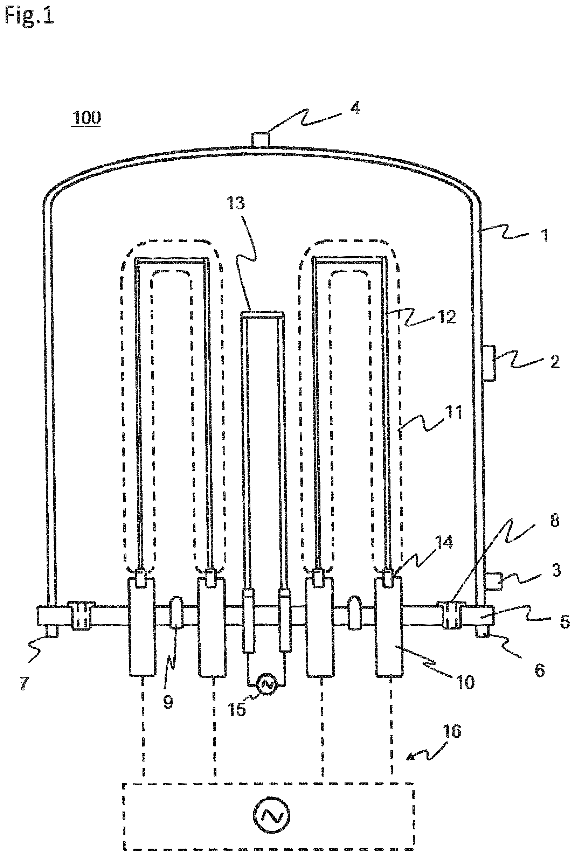

Figure 1 is a schematic cross-sectional diagram illustrating a configuration example of a reactor 100 used in producing a polycrystalline silicon rod according to the embodiment of the present invention. The reactor 100 includes a base plate 5 and a bell jar 1, and employs the Siemens method that promotes the vapor phase growth of polycrystalline silicon on the surface of silicon core wires 12 to produce polycrystalline silicon rods 11.

The base plate 5 has metal electrodes 10 for supplying electric current to the silicon core wires 12; gas nozzles 9 for supplying process gases such as nitrogen gas, hydrogen gas and trichlorosilane gas; and reaction exhaust gas outlets 8 for discharging exhaust gas, disposed thereon.

The bell jar 1 is provided with a refrigerant inlet 3 and a refrigerant outlet 4 for cooling the bell jar 1 and an inspection hole 2 for allowing a visual observation of the interior. The base plate 5 is also provided with a refrigerant inlet 6 and a refrigerant outlet 7 for cooling itself.

A carbon made core wire holder 14 for securing each of the silicon core wires 12 is installed at the top of each of the metal electrodes 10. Electric current applied from a power supply circuit 16 heats the silicon core wires 12 to the polycrystalline silicon rods 11. Although Figure 1 shows two pairs of the U-shaped silicon core wires 12 disposed inside the bell jar 1, the number of pairs of the silicon core wires 12 is not limited to this. Three or more pairs of the silicon core wires 12 may be disposed.

Figure 1 also illustrates a carbon heater 13 that receives power from a power source 15 to heat by radiation the surface of the silicon core wires 12. The carbon heater 13 is used for initially heating the silicon core wires 12 prior to the start of precipitation reaction of polycrystalline silicon. The carbon heater 13 is installed to lower the resistance of the silicon core wires 12 by radiation heating so as to suppress voltage applied to the silicon core wires 12 low at an initial power supply stage. After radiation heating, the silicon core wires 12 are initially energized, and with the surface temperature having reached 900 to 1250°C, a source gas is released to initiate the precipitation of polycrystalline silicon on the surface of the silicon core wires 12.

After the precipitation reaction of polycrystalline silicon is finished, the energization is stopped. Then, the inside of the bell jar 1 is replaced with an inert gas such as nitrogen, the bell jar 1 is lifted by means of a crane or the like, and the polycrystalline silicon rods 11 are taken out. Removal of the core wire holders 14 is easily achieved by pulling them up since they are secured only with their insertion into the metal electrodes 10.

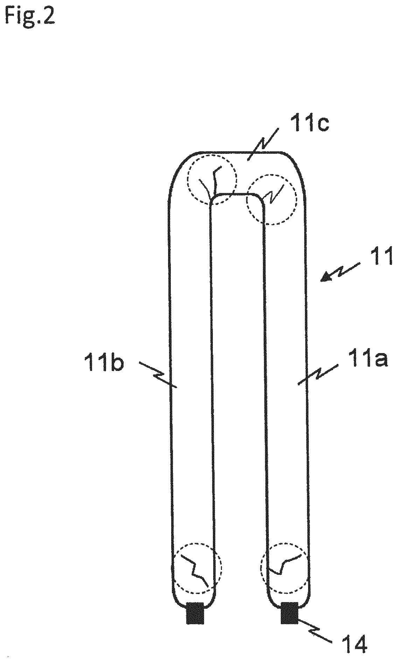

Figure 2 is a diagram for illustrating the appearance of cracks found in a pair of polycrystalline silicon rods 11 after the completion of precipitation reaction. In Figure 2, portions denoted by 11a and 11b are referred to as pillars and a portion denoted by 11c is referred to as a beam. As described above, a crack often appears in a polycrystalline silicon rod after the completion of reaction, posing a danger of collapse and the like. This makes the operation of carrying it out of the reactor (retrieving operation) difficult and dangerous. Such a crack tends to occur at portions corresponding to both of the upper ends of the U-shaped silicon core wire 12 and in the immediate vicinities of both of the lower ends (near the core wire holders 14) that electric current from the metal electrodes 10 flows into and support the full weight that can exceed 400 kg.

To address this problem, the present invention uses a tool that includes a tubular member for accommodating a polycrystalline silicon rod inside and an air bag provided in the tubular member so as to carry a polycrystalline silicon rod in large diameter and large weight, which is produced by precipitation of polycrystalline silicon on a silicon core wire, out of a reactor in a simple and safe manner.

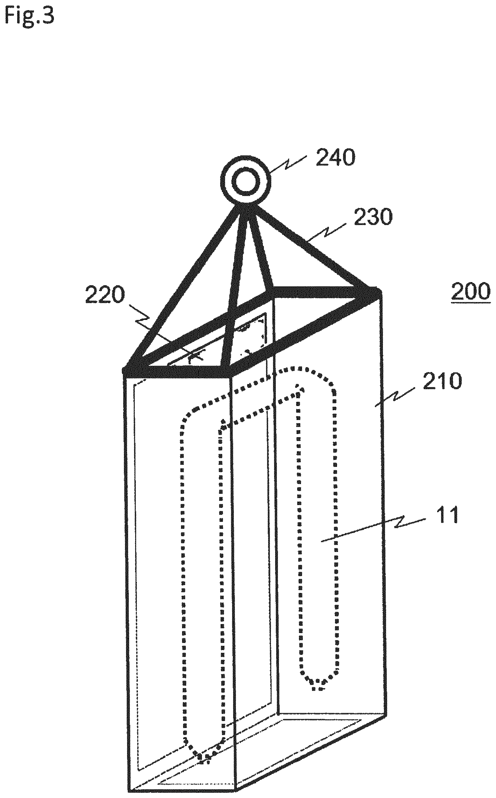

Figure 3 is a schematic diagram illustrating the manner of taking out a polycrystalline silicon rod from a reactor using a tool for carrying out a polycrystalline silicon rod according to the present invention. Retrieving (a pair of) the polycrystalline silicon rods 11 involves accommodating it inside a tubular member 210 of a carrying tool 200, for example, by putting the tubular member 210 on the rods 11 from above, and inflating an air bag 220 by gas injection so as to press a side of the polycrystalline silicon rods 11 from a direction perpendicular to a plane including both pillars of the U-shaped silicon core wire so that the polycrystalline silicon rods 11 are held in place inside the tubular member 210. Then, the polycrystalline silicon rods 11 held in place are taken out of the reactor. Even if the polycrystalline silicon rods 11 have cracks, a collapse and the like are avoided as the air bag 220 absorbs external impacts or the like.

The carrying tool 200 includes, at the top of the tubular member 210, wires 230 and a hook 240 as suspension jigs for lifting and moving the polycrystalline silicon rods 11 held in place. Retrieving operation is remotely performed with a lift such as a crane or an apparatus such as a robot arm through the use of the suspension jigs.

The shape of the tubular member 210 is not necessarily limited to a rectangle in cross section.

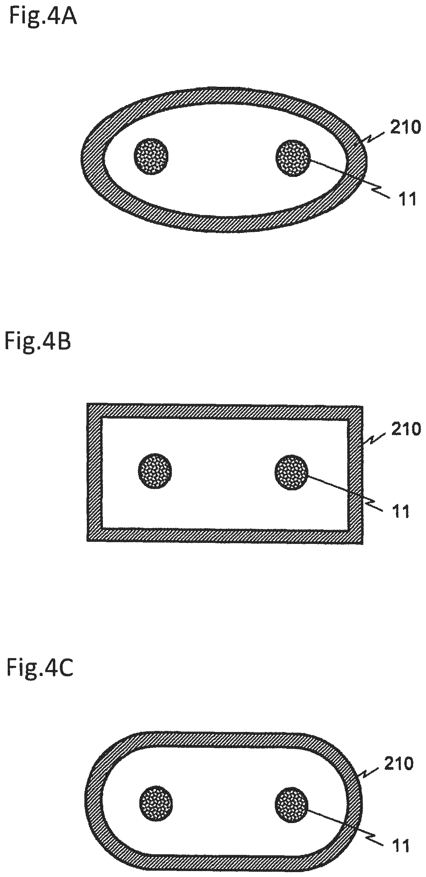

Figures 4A to 4C each exemplify the cross-sectional shape of a tubular member 210 when the tubular member 210 contains a pair of the polycrystalline silicon rods 11 inside, sectioned in a direction perpendicular to the longitudinal direction thereof. The tubular member 210 of Figure 4A has an ellipse-shaped section; the tubular member 210 of Figure 4B has a rectangle-shaped section; and the tubular member 210 of Figure 4C has a curvature at each corner and each short side in its cross-sectional shape.

Preferably, the inner circumference surface of the tubular member 210 has at least one pair of two planes facing each other for the sake of convenience in carrying the tubular member 210 inclusive of the polycrystalline silicon rods 11, after retrieving, loaded on a cart or the like.

The air bag 220 is provided at only one of the two planes facing each other. Rubber or other elastic member is provided at the plane without the air bag 220. The elastic member brings about an effect similar to that of the air bag 220.

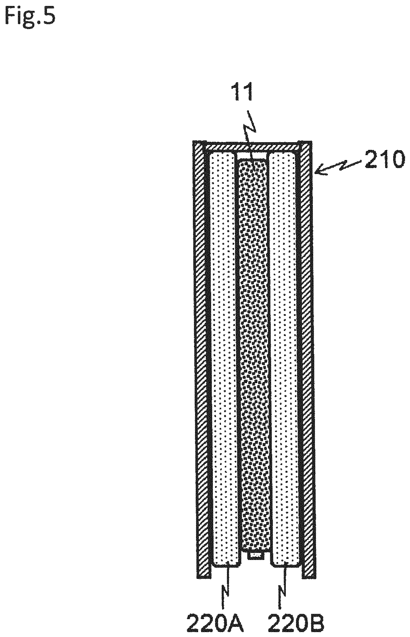

Figures 5 to 7 each exemplify the longitudinal-section shape of a tubular member 210 when the tubular member 210 contains a pair of the polycrystalline silicon rods 11 inside. In the comparative example of Figure 5, air bags 220A, 220B are provided respectively at two planes facing each other on the inner circumference surface of the tubular member 210. The two air bags in an inflated state press the sides of the polycrystalline silicon rods 11 from a direction perpendicular to a plane including both pillars so as to hold it in place inside the tubular member 210.

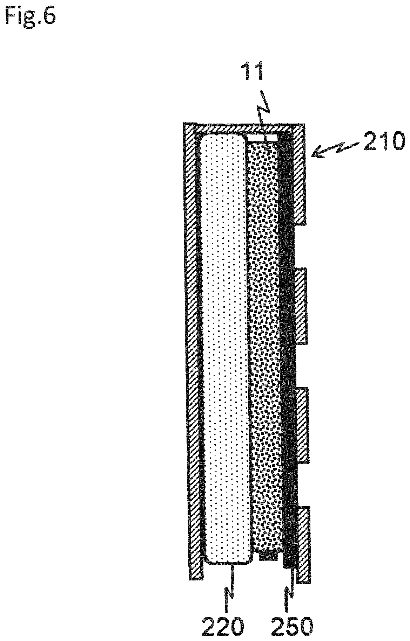

In an example of Figure 6, an air bag 220 provided at one of two planes facing each other on the inner circumference surface of the tubular member 210 and rubber or other plate-like elastic member 250 inserted at the other plane hold the polycrystalline silicon rods 11 in place in the tubular member 210.

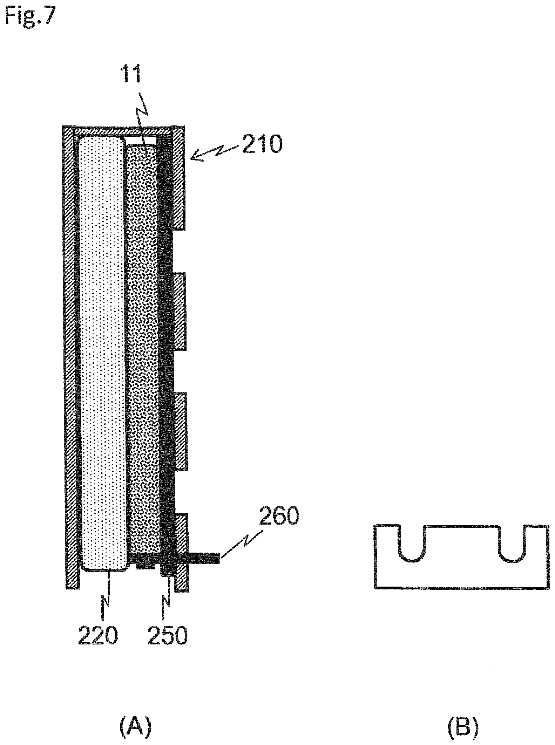

An example of Figure 7 includes, at the lower part of the example of Figure 6, a detachable plate member (a bottom board 260) that prevents the polycrystalline silicon rods 11 from falling (Figure 7A). The bottom board 260 has slits to support the polycrystalline silicon rods 11 from the lower ends of the pillars (Figure 7B).

Examples of materials for the tubular member 210 includes stainless steel, resin lined stainless steel, and a steel sheet because the tubular member 210 needs to possess adequate strength when the air bag 220 is inflated by gas injection. Lumber and the like may be partially used as long as adequate strength is ensured. When the material of the tubular member 210 is a metal such as stainless steel, contact of the polycrystalline silicon rods 11 with the inner wall causes the polycrystalline silicon rods 11 to be polluted with the metal. To avoid this situation, it is preferred that a resin-made bag or the like for pollution prevention be put in the tubular member 210 and the polycrystalline silicon rods 11 covered with this be accommodated in the tubular member 210.

The air bag 220 may be installed at part of the surface of the inner wall for installation in the tubular member because it is not necessarily required to be installed at the whole surface of the inner wall. The air bag 220, however, should be installed at least at portions corresponding to both of the upper ends of the U-shaped silicon core wire 12 and areas corresponding to the immediate vicinities of both of the lower ends that support the full weight since these portions and areas are apt to be cracked, as shown in Figure 2. Preferably, the air bag 220 should be installed at the whole surface of the inner wall for installation in the tubular member to enhance working efficiency and ensure stability in holding the polycrystalline silicon rods 11.

Examples of materials for the air bag 220 include natural rubber and synthetic rubber materials since the material needs to possess adequate strength and elasticity. When natural rubber is selected, it is preferred that the surface side that contacts the polycrystalline silicon rods 11 be covered with a coating composed of Teflon, polyethylene and/or other similar materials that provide easy cleaning so as to prevent pollution due to a metal, sulfur or the like from occurring. The resin-made bag or the like for pollution prevention described above, if it is made of polyethylene or the like that provides easy cleaning, contributes to the avoidance of pollution.

The injecting pressure of gas to the air bag 220 is between 0.01 MPa and 0.05 MPa although it varies with the weight of the polycrystalline silicon rods 11 to be retrieved. Preferably, it should be between 0.01 MPa and 0.03 MPa.

Gas is injected into the air bag 220 through a pressure-resistant tube. The tube may be a permanently-installed type or a type detachable from the main body through a joint coupler or the like.

After the polycrystalline silicon rods 11 are retrieved and accommodated in the tubular member 210, a cart or the like with rollers is recommended to move the polycrystalline silicon rods 11 to another location for processing operation and the like.

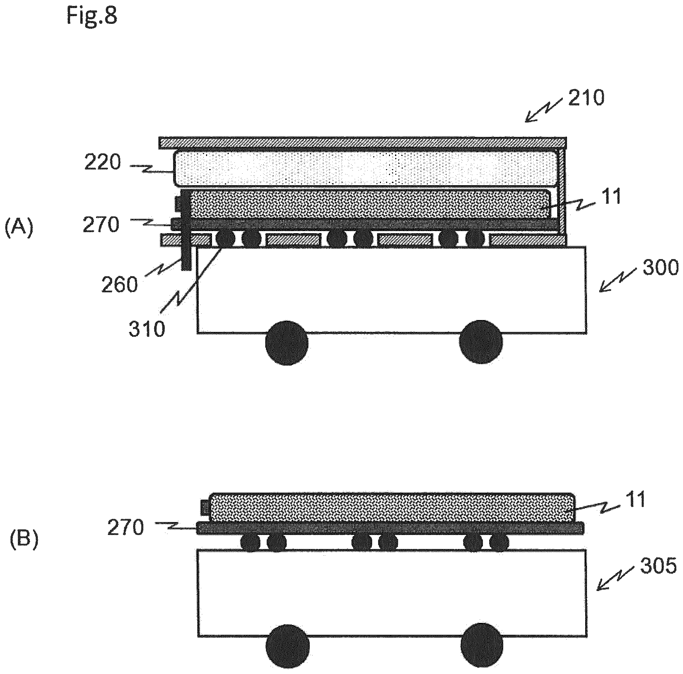

Figure 8 is a diagram for illustrating by example the manner of taking out only the polycrystalline silicon rods 11 accommodated in a tubular member 210 onto a cart 300 with rollers after the tubular member 210 is laid on its side on the cart 300.

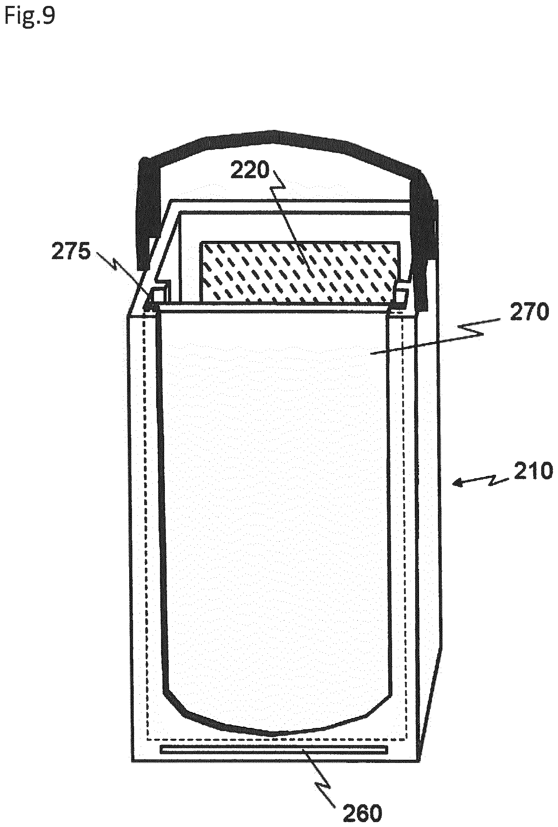

Figure 9 is a diagram for illustrating a configuration of the tubular member 210 exemplified in Figure 8. One side of four flat sides (outer circumference face) in the tubular member 210 is a plate-like member 270 dismountable (extractable) from the main body. The plate-like member 270 is placed on rollers 310 provided on the upper part of the cart 300 when the tubular member 210 is laid on the cart 300. The clearance of an insertion opening 275 through which the plate-like member 270 is put in or taken out is designed to be a value that allows the plate-like member 270 to be easily taken out with the plate-like member 270 pressed with the rollers 310 from below. An elastic member such as rubber may be pasted on a surface of the plate-like member 270 where the surface supports the polycrystalline silicon rods 11.

The tubular member 210 accommodating the polycrystalline silicon rods 11 inside is laid on its side on the upper part of the cart 300 with the plate-like member 270 side facing downward on the rollers 310 (Figure 8A). At this time, the air bag 220 has been degassed (released); the plate-like member 270 is lifted by the rollers 310 as much as the clearance described above; and other portions of the tubular member 210 are placed directly on the main body of the cart 300. In this state, with a second cart 305 prepared, the plate-like member 270 is taken out from the cart 300 onto the cart 305 so as to draw only the extractable plate-like member 270 carrying the polycrystalline silicon rods 11 on its upper surface out of the main body of the tubular member 210. A method like this permits even very heavy polycrystalline silicon rods to be safely carried out.

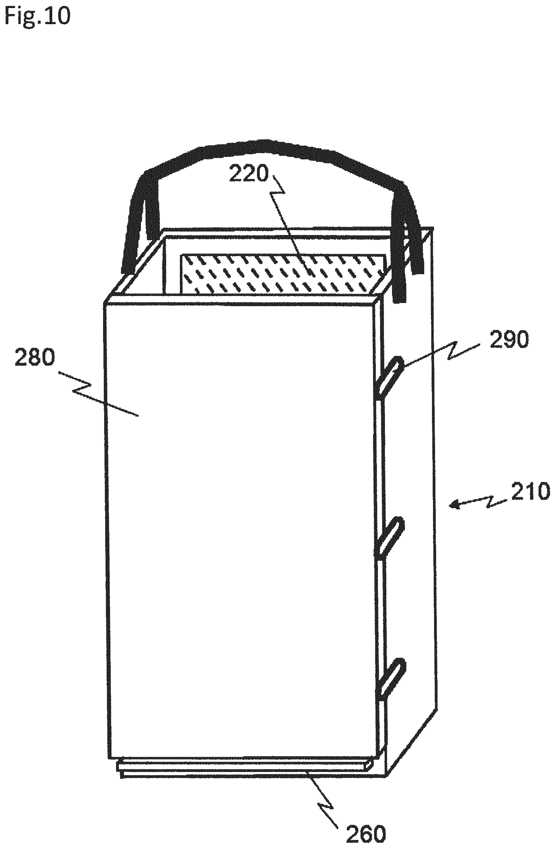

A configuration of the tubular member 210 having an outer circumference face detachable from the main body may represent a mode in which one side of four flat sides (outer circumference face) in the tubular member 210 is a plate-like member 280 detachable with buckles 290, as exemplified in Figure 10.

### Industrial Applicability

The present invention provides an art for carrying out polycrystalline silicon rods having large diameters and heavy weights, which are produced by precipitation of polycrystalline silicon on a silicon core wire, from a reactor in a simple and safe manner.

### Reference Signs List

- 1: bell jar
- 2: inspection hole
- 3: refrigerant inlet
- 4: refrigerant outlet
- 5: base plate
- 6: refrigerant inlet
- 7: refrigerant outlet
- 8: reaction exhaust gas outlets
- 9: gas nozzles
- 10: metal electrodes
- 11: polycrystalline silicon rod
- 11a, 11b: pillars
- 11c: beam
- 12: silicon core wire
- 13: carbon heater
- 14: core wire holders
- 15: power source
- 16: power supply circuit
- 100: reactor
- 200: carrying tool
- 210: tubular member
- 220: air bag
- 230: wire
- 240: hook
- 250: plate-like elastic member
- 260: bottom board
- 270: plate-like member
- 275: insertion opening for plate-like member
- 280: plate-like member
- 290: buckles
- 300, 305: carts with rollers
- 310: rollers

## Claims

1. A polycrystalline silicon rod carrying tool for taking a silicon rod out of a reactor, the silicon rod being polycrystalline silicon grown on a U-shaped silicon core wire, the polycrystalline silicon rod carrying tool comprising:
a tubular member for completely accommodating the polycrystalline silicon rod inside; and
an air bag provided in the tubular member,
wherein the air bag inflated by gas injection having an injection pressure between 0.01 MPa and 0.05 MPa to the interior presses a side of the polycrystalline silicon rod from a direction perpendicular to a plane including both pillars of the U-shaped silicon core wire so as to hold the polycrystalline silicon rod in place inside the tubular member,
wherein the inner circumference surface of the tubular member has at least one pair of two planes facing each other and the air bag is provided at one of the two planes, and
wherein the other of the two planes, where the air bag is not provided, includes an elastic member that comes in contact with one side of the polycrystalline silicon rod held in place in the tubular member.

2. The polycrystalline silicon rod carrying tool according to claim 1, further comprising a suspension jig for lifting and moving the tubular member holding the polycrystalline silicon rod inside.

3. The polycrystalline silicon rod carrying tool according to claim 1, wherein a detachable bottom board is provided at the lower part of the tubular member.

4. The polycrystalline silicon rod carrying tool according to claim 1, wherein the outer circumference face of at least one of two inner circumferential planes facing each other in the tubular member is a smooth surface.

5. The polycrystalline silicon rod carrying tool according to claim 4, wherein the outer circumference face is detachable from the main body of the tubular member.

6. A method of retrieving a polycrystalline silicon rod by means of the polycrystalline silicon rod carrying tool according to claim 1,
wherein the method includes accommodating a polycrystalline silicon rod in the tubular member, holding in place the polycrystalline silicon rod with the air bag inflated by gas injection having an injection pressure between 0.01 MPa and 0.05 MPa in the tubular member, and taking the tubular member out of the reactor.

## Patentansprüche

1. Polykristallinen Siliciumstab tragendes Werkzeug für das Herausnehmen eines Siliciumstabs aus einem Reaktor, wobei der Siliciumstab polykristallines Silicium ist, das an einem U-förmigen Siliciumkerndraht gezogen wurde, wobei das einen polykristallinen Siliciumstab tragende Werkzeug Folgendes umfasst:
ein röhrenförmiges Element für die vollständige Unterbringung des polykristallinen Siliciumstabs im Inneren; und
ein Luftkissen, das in dem röhrenförmigen Element bereitgestellt ist,
wobei das Luftkissen, das durch Gasinjektion aufgeblasen wird, die einen Injektionsdruck zwischen 0,01 MPa und 0,05 MPa auf das Innere hat, eine Seite des polykristallinen Siliciumstabs von einer Richtung drückt, die senkrecht zu einer Ebene vorliegt, die beide Pfeiler des U-förmigen Siliciumkerndrahts einschließt, sodass der polykristalline Siliciumstab im Inneren des röhrenförmigen Elements in Position gehalten wird,
wobei die Innenumfangsfläche des röhrenförmigen Elements mindestens ein Paar von zwei Ebenen aufweist, die einander zugewandt sind, und das Luftkissen an einer der zwei Ebenen bereitgestellt ist und
wobei die andere der zwei Ebenen, wo das Luftkissen nicht bereitgestellt ist, ein elastisches Element einschließt, das mit einer Seite des polykristallinen Siliciumstabs, der in dem röhrenförmigen Element in Position gehalten wird, in Kontakt kommt.

2. Polykristallinen Siliciumstab tragendes Werkzeug nach Anspruch 1, das weiter eine Aufhängungsvorrichtung für das Heben und Bewegen des röhrenförmigen Elements aufweist, das den polykristallinen Siliciumstab im Inneren hält.

3. Polykristallinen Siliciumstab tragendes Werkzeug nach Anspruch 1,
wobei eine abnehmbare Bodenplatte an dem unteren Teil des röhrenförmigen Elements bereitgestellt ist.

4. Polykristallinen Siliciumstab tragendes Werkzeug nach Anspruch 1,
wobei die Außenumfangsseite von mindestens einer der zwei Innenumfangsebenen, die einander in dem röhrenförmigen Elements zugewandt sind, eine glatte Oberfläche ist.

5. Polykristallinen Siliciumstab tragendes Werkzeug nach Anspruch 4,
wobei die Außenumfangsseite von dem Hauptkörper des röhrenförmigen Elements abnehmbar ist.

6. Verfahren zum Zurückholen eines polykristallinen Siliciumstabs mithilfe des polykristallinen Siliciumstab tragenden Werkzeugs nach Anspruch 1,
wobei das Verfahren Folgendes einschließt: Unterbringen eines polykristallinen Siliciumstabs in dem röhrenförmigen Element, Halten des polykristallinen Siliciumstabs mit dem Luftkissen, das durch Gasinjektion aufgeblasen wird, die einen Injektionsdruck zwischen 0,01 MPa und 0,05 MPa hat, in dem röhrenförmigen Element in Position und Herausnehmen des röhrenförmigen Elements aus einem Reaktor.

## Revendications

1. Outil de transport de barreau de silicium polycristallin pour sortir un barreau de silicium d'un réacteur, le barreau de silicium étant du silicium polycristallin développé sur un fil central de silicium en forme de U, l'outil de transport de barreau de silicium polycristallin comprenant :
un élément tubulaire destiné à recevoir complètement le barreau de silicium polycristallin à l'intérieur ; et
un sac d'air fourni dans l'élément tubulaire,
dans lequel le sac d'air gonflé par une injection de gaz ayant une pression d'injection comprise entre 0,01 MPa et 0,05 MPa vers l'intérieur appuie contre un côté du barreau de silicium polycristallin depuis une direction perpendiculaire à un plan incluant les deux piliers du fil central de silicium en forme de U de manière à maintenir le barreau de silicium polycristallin en place à l'intérieur de l'élément tubulaire,
dans lequel la surface de circonférence interne de l'élément tubulaire a au moins une paire de deux plans en face l'un de l'autre et le sac d'air est fourni au niveau d'un des deux plans, et
dans lequel l'autre des deux plans, où le sac d'air n'est pas fourni, inclut un élément élastique qui entre en contact avec un côté du barreau de silicium polycristallin maintenu en place dans l'élément tubulaire.

2. Outil de transport de barreau de silicium polycristallin selon la revendication 1, comprenant en outre un gabarit de suspension destiné à lever et à déplacer l'élément tubulaire maintenant le barreau de silicium polycristallin à l'intérieur.

3. Outil de transport de barreau de silicium polycristallin selon la revendication 1, dans lequel un panneau inférieur détachable est fourni au niveau de la partie inférieure de l'élément tubulaire.

4. Outil de transport de barreau de silicium polycristallin selon la revendication 1, dans lequel la face de circonférence externe d'au moins un des deux plans circonférentiels internes en face l'un de l'autre dans l'élément tubulaire est une surface lisse.

5. Outil de transport de barreau de silicium polycristallin selon la revendication 4, dans lequel la face de circonférence externe peut être détachée du corps principal de l'élément tubulaire.

6. Procédé de récupération d'un barreau de silicium polycristallin au moyen de l'outil de transport de barreau de silicium polycristallin selon la revendication 1, dans lequel le procédé inclut la réception d'un barreau de silicium polycristallin dans l'élément tubulaire, en maintenant en place le barreau de silicium polycristallin avec le sac d'air gonflé par une injection de gaz ayant une pression d'injection comprise entre 0,01 MPa et 0,05 MPa dans l'élément tubulaire, et la sortie de l'élément tubulaire du réacteur.
